# EUROPEAN PATENT SPECIFICATION

(11) **EP 3 520 607 B1**
(45) Date of publication and mention of the grant of the patent: **28.12.2022**
(21) Application number: 19155355.1
(22) Date of filing: 04.02.2019
(51) Int. Cl.: A01K 7/02, A01K 63/04, F04B 23/02, F04D 13/02, F03B 13/00, H02K 11/00

(54) **WATER PUMP AND AQUARIUM EQUIPMENT COMPRISING THE WATER PUMP**
WASSERPUMPE UND AQUARIUMAUSRÜSTUNG MIT DER WASSERPUMPE
POMPE À EAU ET ÉQUIPEMENT D'AQUARIUM COMPRENANT LA POMPE À EAU

(30) Priority: 06.02.2018 CN 201810117782; 06.02.2018 CN 201820219475 U; 12.06.2018 CN 201810602021; 12.06.2018 CN 201820911537 U; 21.11.2018 CN 201821922602 U
(43) Date of publication of application: 07.08.2019
(73) Proprietor: Guangdong Boyu Group Co., Ltd, Raoping County Chaozhou Guangdong 515700 (CN)
(72) Inventor: YU, Youkai, Chaozhou City, Guangdong 515700 (CN); YU, Bingyan, Chaozhou City, Guangdong 515700 (CN); YU, Jianqin, Chaozhou City, Guangdong 515700 (CN)
(74) Representative: DREISS Patentanwälte PartG mbB

(56) References cited:
- WO-A1-98/14054
- US-A- 4 820 410
- US-A1- 2003 197 441
- US-A1- 2011 239 951

## Description

### TECHNICAL FIELD

The present invention relates to the technical field of aquarium equipment comprising a water pump.

### BACKGROUND

With the advancement of the era, people are having more and more space for leisure activities. Keeping pets has become a way of entertainment as well as releasing stress. One way of keeping pets is to keep a fish or other pets in an aquarium, and so aquariums have become an indispensable piece of furniture or decoration in a home or working environment.

Typically, a variety of internal devices such as a water pump, a lamp, a filter, and the like are usually arranged in existing aquarium, and the internal devices are typically connected to an external power source through a power supply wire directly led into the inside of a tank of the aquarium. However, the following defects exist when such power supply mode is adopted for the internal devices. First is the hidden danger of electric leakage that may be brought about by the internal devices, unless they are powered up by a low safety voltage. Second, it would be made extremely inconvenient to move, clean and maintain the aquarium when the power supply wire is directly led from the outside of the tank into the inside of the tank and then is connected to the various devices. In particular, the internal devices and the power supply connections need to be firstly removed, and then the aquarium is able to be moved. The operation is quite complicated, thereby bringing people great inconvenience.

In view of the above problems, there is a need to design an aquarium that provides high safety and convenience for power supply connection, so as to facilitate the movement, cleaning and maintenance of the aquarium.

US 2011/239951 A1 discloses an aquarium equipment according to the preamble of claim 1.

### SUMMARY

The present invention provides a water pump that is capable of supplying power to an electric device while pumping water.

The present invention provides an aquarium equipment according to independent claim 1, comprising a water pump. With the aquarium equipment, a power supply device outside the tank is not needed to supply power to the electric device in the tank. Potential safety hazards such as electric leakage which occurs when the power supply device outside the tank is separately used to supply power to the electric device in the tank may be avoided.

An embodiment provides an aquarium equipment , comprising a water pump and a tank. The water pump includes a stator, a rotor assembly, an impeller and a power generation induction module. The stator includes a U-shaped iron core and a coil winding wound around the U-shaped iron core. The coil winding is connected to an external power source. The rotor assembly includes a rotating shaft and a permanent magnet rotor. The impeller is connected to the rotating shaft or to the permanent magnet rotor. The power generation induction module is spaced apart from the rotor assembly. The rotor assembly and the power generation induction module are each disposed within a range of a magnetic field at an opening of the U-shaped iron core. The power generation induction module is electrically connected to an electric equipment. The rotor assembly, the impeller and the power generation induction module are disposed in the tank, and the stator is disposed outside the tank. A stator chamber for accommodating the stator is provided concavely at an outer wall of the tank in a direction facing inward the tank. The stator chamber comprises two first accommodation chambers spaced apart from each other, the U-shaped iron core comprises two second iron core protrusions which protrude from two coil windings respectively, the two second iron core protrusions are arranged in the two first accommodation chambers respectively. An accommodation groove is disposed in an inner wall of the tank and between the two first accommodation chambers, the permanent magnet rotor is disposed in the accommodation groove. The power generation induction module comprises two induction coils, and the two induction coils are wound respectively outside the two first accommodation chambers along circumferences of the first accommodation chambers.

Further improvements and embodiments are provided in the dependent claims.

The present invention provides the following beneficial effects. The water pump according to the invention adopts the stator, the rotor assembly and the power generation induction module in combination, so that it can supply power to the electric device while pumping water at the same time. Compared with the related art, the turning -on/off of the electric device is more convenient and potential safety hazards such as electric leakage which may occur when the power supply device is separately used to power up the electric device can be avoided.

### BRIEF DESCRIPTION OF DRAWINGS

FIG. 1 is a sectional view of an aquarium equipment according to an embodiment.
FIG. 2 is an exploded view of FIG. 1.
FIG. 3 is a sectional view of an aquarium equipment according to an embodiment.
FIG. 4 is a structural diagram of a stator, a rotor assembly and a power generation induction module according to an embodiment.
FIG. 5 is a structural diagram of a stator, a rotor assembly and a power generation induction module according to another embodiment.
FIG. 6 is a top view of FIG. 4.
FIG. 7 is a structural diagram of an aquarium equipment according to another embodiment.
FIG. 8 is a sectional view of an aquarium equipment according to another embodiment.
FIG. 9 is an exploded view of an aquarium equipment according to another embodiment.
FIG. 10 is a structural diagram of a tank of an aquarium equipment according to another embodiment.
FIG. 11 is an exploded view of a water pump of an aquarium equipment according to another embodiment (in which a stator is not illustrated).
FIG. 12 is a structural diagram of a stator of an aquarium equipment according to another embodiment.
FIG. 13 is a structural diagram of a water pump according to another embodiment.
FIG. 14 is a main view of a water pump according to another embodiment.
FIG. 15 is a sectional view of a water pump according to another embodiment.
FIG. 16 is an assembly view of a stator and an induction coil according to an embodiment.
FIG. 17 is an assembly view of a stator and an induction coil according to another embodiment.
FIG. 18 is an assembly view of a stator and an induction coil according to another embodiment.

### In the drawings:

| | | |
|---|---|---|
| 100: Water Pump | 1. Stator | 101. U-shaped Iron Core |
| 102. Coil Winding | 103. Second Iron Core Protrusion | 104. Notch |
| 2. Rotor Assembly | 201. Rotating Shaft | 202. Permanent Magnet Rotor |
| 3. Impeller | 4. Power Generation Induction Module | 401. Induction Iron Core |
| 403. First Iron Core Protrusion | 5. Pump House | 501. Pump House Body |
| 502. Pump House Cover | 503. Water Inlet | 504. Water Outlet |
| 6. Mounting Base | 7. Rotor Chamber | 8. Impeller Chamber |
| 9. Stator Chamber | 901. First Accommodation Chamber | 902. Second Accommodation Chamber |
| 10. Reel | 11. Power Generation Chamber | 200. Tank |
| 210. Accommodation Groove | 220. Connecting Member | 300. Filter |
| 310. First Mounting Slot | 320. Second Mounting Slot | 400. Base Seat |
| 410. Stator Isolation Chamber | 420. Wire Fixing clip | 500. Lamp |

### DETAILED DESCRIPTION

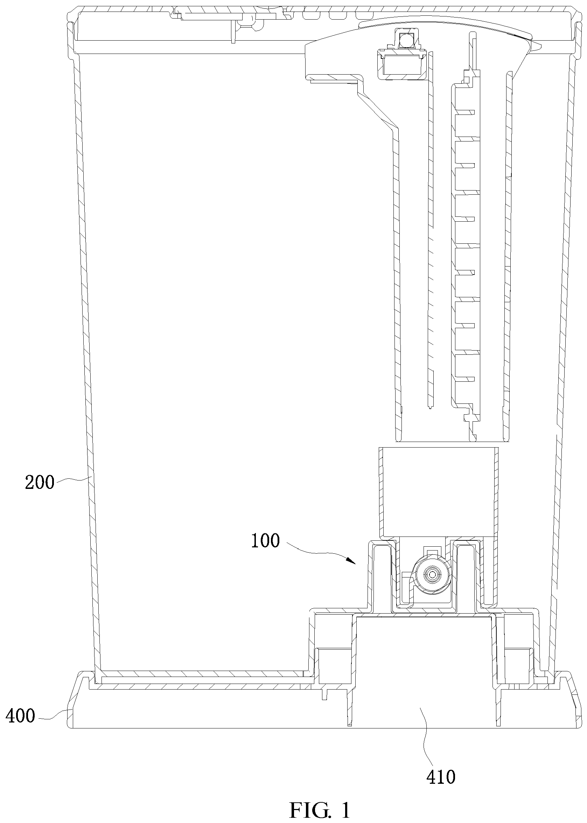

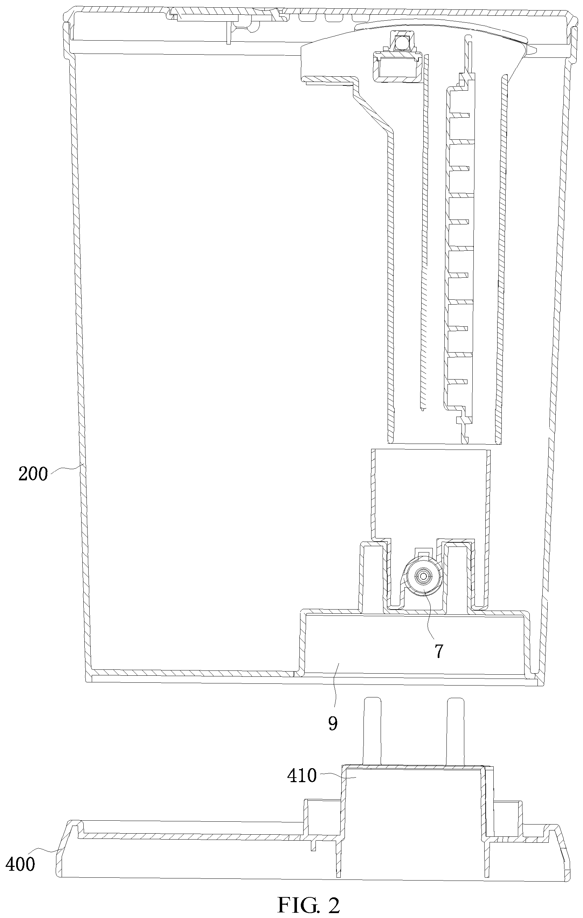

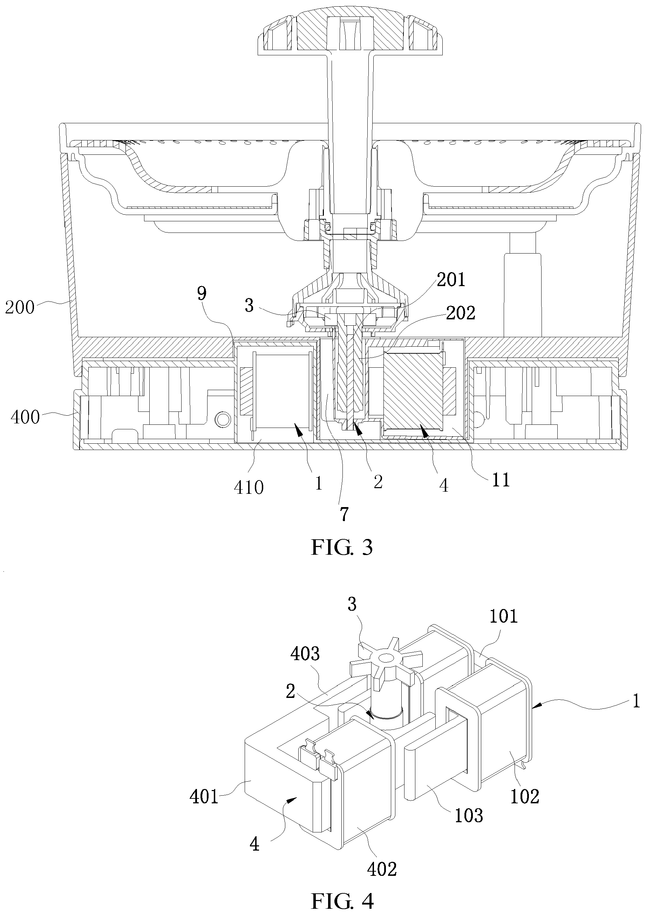

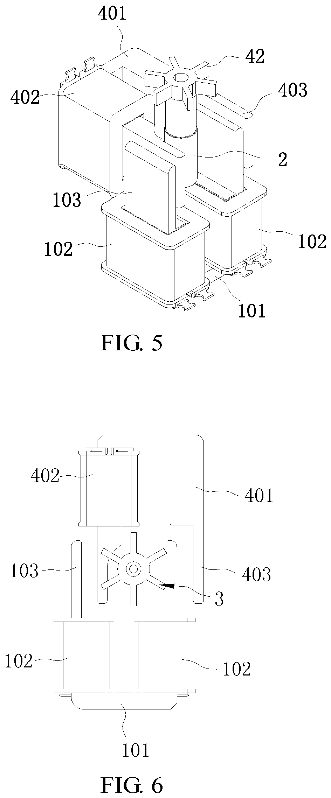

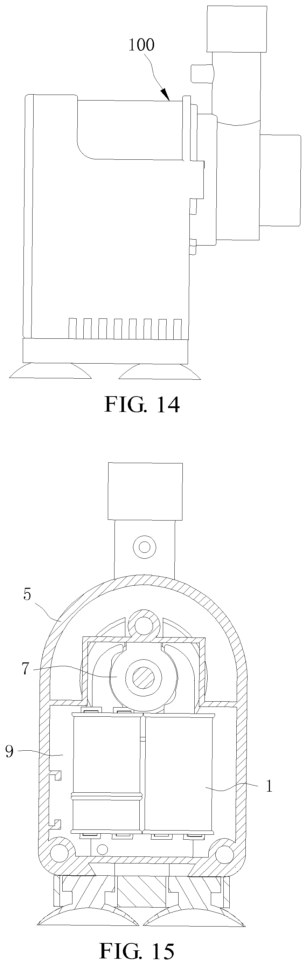

As illustrated in FIGS. 1 to 18, a water pump 100 may be applied in an aquarium equipment. The aquarium equipment may be an aquarium or a pet water dispenser, etc. In the following embodiments, the aquarium may be taken as an example of the aquarium equipment to be described, and the aquarium includes a tank 200 and a water pump 100 that pumps water to the tank 200 and supply power to the electric equipment on the tank 200.

In the following drawings, the embodiments of FIGS. 1-6 and 13-18 are examples of the non-claimed inventions and thus are not part of the claimed invention.

As illustrated in FIGS. 1 to 18, a water pump 100 of the aquarium in an embodiment includes a stator 1, a rotor assembly 2, an impeller 3 and a power generation induction module 4. The stator 1 includes a U-shaped iron core 101 and a coil winding 102 wound around the U-shaped iron core 101. The coil winding 102 is connected to an external power source. The rotor assembly 2 includes a rotating shaft 201 and a permanent magnet rotor 202. The impeller 3 is connected to the rotating shaft 201 or to the permanent magnet rotor 202. The power generation induction module 4 is spaced apart from the rotor assembly 2. The rotor assembly 2 and the power generation induction module 4 are each disposed within a range of a magnetic field at an opening of the U-shaped iron core 101. The power generation induction module 4 is electrically connected to an electric equipment. The water pump 100 of the present invention, by combining the stator 1, the rotor assembly 2 and the power generation induction module 4, can supply power to the electric equipment while pumping water. Compared with the related art, the on/off connection of the electric equipment is more convenient, and potential safety hazards such as electric leakage, which may occur easily in response to determining that a power supply device is separately used to power the electric equipment up, can be avoided.

In an embodiment, as illustrated in FIGS. 1 to 6, the rotor assembly 2, the impeller 3 and the power generation induction module 4 of the water pump 100 in the embodiment are disposed inside a tank 200 of the aquarium equipment, and the stator 1 is disposed outside the tank 200. In the solution, the power generation induction module 4 disposed in the tank 200 may be induced by a magnetic field generated by the U-shaped iron core 101 on the stator 1, to generate an induced current, thereby supplying electricity to the electric equipment in the tank 200. Thus, the electric equipment in the tank 200 can avoid being connected to the external power source through a wire, reducing the safety hazard caused by the electric leakage. In addition, the stator 1 and rotor assembly 2 of the water pump 100 are respectively disposed outside and inside the tank 200, thus the stator 1 is isolated from water in the tank 200, and then the power is prevented from being transmitted to the tank 200 in response to determining that electric leakage occurs on the external power source, and further the safety hazard may be effectively reduced. The coil winding 102 and the power generation induction module 4 are disposed apart from each other and disposed outside and inside the tank 200, so that the safety of use of the electric equipment in the tank 200 can be ensured. That is, power of the external power source connected to the coil winding 102 is not directly transmitted to the power generation induction module 4, thus, damage to the electric equipment caused by excessive large current and voltage of the power generation induction module 4 may be avoided, reducing the safety hazard.

The power generation induction module 4 includes an induction iron core 401 and an induction coil 402. The induction coil 402 is wound around the induction iron core 401. The induction iron core 401 is at least partially disposed within the range of the magnetic field at the opening of the U-shaped iron core 101.

By means of disposing the power generation induction module 4 including the induction iron core 401 and the induction coil 402 in the tank 200 and disposing the induction iron core 401 at least partially within the range of the magnetic field generated by the U-shaped iron core 101 of the stator 1, in response to powering on the stator 1 to drive the rotor assembly 2 to rotate, the magnetic field of the U-shaped iron core 101 is guided by the induction iron core 401 in the magnetic field of the U-shaped iron core 101 to a range in which the induction coil 402 is situated, so that the induction coil 402 and the magnetic field of the U-shaped iron core 101 are mutually induced, and the induced current is generated in the induction coil 402 to supply power to the electric equipment in the tank 200.

The induction iron core 401 has a first iron core protrusion 403 protruding from the induction coil 402, and the first iron core protrusion 403 is disposed within the range of the magnetic field at the opening of the U-shaped iron core 101.

By means of disposing the first iron core protrusion 403 on the induction iron core 401 and within the coverage of the magnetic field at the opening of the U-shaped iron core 101, the magnetic field at the opening of the U-shaped iron core 101 may be guided to the induction iron core 401, such that the induction coil 402 can be covered by the magnetic field of the U-shaped iron core 101, thereby generating the induced current in the induction coil 402 to power up the electric equipment. Moreover, the arrangement of the first iron core protrusion 403 may reduce the space occupied by the induction iron core 401 at the opening of the U-shaped iron core 101, and reduce the mounting space for the rotor assembly 2 occupied by the power generation induction module 4.

Further, the U-shaped iron core 101 has a second iron core protrusion 103 protruding from the coil winding 102, and the first iron core protrusion 403 and the second iron core protrusion 103 are oppositely disposed.

By means of disposing the first iron core protrusion 403 and the second iron core protrusion 103 respectively on the induction iron core 401 and the U-shaped iron core 101 and arranging the first iron core protrusion 403 and the second iron core protrusion 103 oppositely, occupying the mounting space of the rotor assembly 2 may be further reduced and the normal mounting and operation of the rotor assembly 2 may be guaranteed.

The permanent magnet rotor 202 of the rotor assembly 2 is correspondingly disposed within the range of the magnetic field of the U-shaped iron core 101 and is disposed within the opening of the U-shaped iron core 101.

By means of disposing the permanent magnet rotor 202 of the rotor assembly 2 within the opening of the U-shaped iron core 101, the permanent magnet rotor 202 is guaranteed to be always located in the magnetic field of the U-shaped iron core 101, normal operation of the permanent magnet rotor 202 is guaranteed, and the amount of magnet induction received by the permanent magnet rotor 202 is guaranteed.

A rotor accommodation position is provided within the opening of the U-shaped iron core 101 of the stator 1. The rotor assembly 2 is disposed in the rotor accommodation position and is located within the range of the magnetic field of the U-shaped iron core 101.

The permanent magnet rotor 202 of the rotor assembly 2 is located in the rotor accommodation position. The impeller 3 is drivingly connected to the permanent magnet rotor 202 through the rotating shaft 201. Alternatively, the impeller 3 is directly fixedly connected to the permanent magnet rotor 202 and rotates around the rotating shaft 201 together with the permanent magnet rotor 202.

By means of disposing the rotor accommodation position, the positioning of the rotor assembly 2 may be realized, so as to ensure the normal mounting position of the rotor assembly 2, avoid mutual interference between the power generation induction module 4 and the rotor assembly 2 and ensure the normal operation of the rotor assembly 2.

The angle between the induction iron core 401 and the U-shaped iron core 101 may be 0 to 180 degrees. For example, the induction iron core 401 and the U-shaped iron core 101 are both horizontally disposed or vertically disposed. For example, the induction iron core 401 is horizontally disposed, and the U-shaped iron core 101 is vertically disposed. For example, the induction iron core 401 is vertically disposed, and the U-shaped iron core 101 is horizontally disposed. For example, the angle between the induction iron core 401 and the U-shaped iron core 101 is another remaining angle. In addition, the angle between the rotor assembly 2 and the U-shaped iron core 101 is 0 to 180 degrees, but that angle is not limited to a specific angle. The angle between the rotor assembly 2 and the U-shaped iron core 101 is set according to an actual demand, and an exemplary angle is that the rotor assembly 2 is parallel (non-coincident) or perpendicular to the U-shaped iron core 101.

The first iron core protrusion 403 of the induction iron core 401 above-mentioned is always situated within the range of the magnetic field at the opening of the U-shaped iron core 101, and the permanent magnet rotor 202 of rotor assembly 2 the above-mentioned is always located within the range of the magnetic field at the opening of the U-shaped iron core 101.

By means of adjusting the arrangement states of the induction iron core 401 and the U-shaped iron core 101, the arrangement of the induction iron core 401 and the U-shaped iron core 101 may be more reasonable, and a negative impact of the arrangement of the induction iron core 401 on the arrangement of the rotor assembly 2 is avoided.

After the single-phase power source is supplied to the coil winding 102 on the stator 1, an alternating magnetic field is formed between the two second iron core protrusions 103 of the U-shaped iron core 101 and thereby drives the permanent magnet rotor 202 of the rotor assembly 2 in the tank 200 to rotate. The permanent magnet rotor 202 in turn drives the impeller 3 to rotate to generate a centrifugal force, and the water pumping is achieved under the action of the impeller chamber (which is a chamber for mounting the impeller 3). At the same time, the induction coil 402 wound around the induction iron core 401 is induced by the alternating magnetic field on the coil winding 102 and the U-shaped iron core 101, and an induced current is generated in the induction coil 402. Thus, power is supplied to the other electric equipments.

In the embodiment, the electric equipments are all low-power devices, and all may be powered through the induction coil 402 wound around the induction iron core 401. Experiments prove that it is totally feasible to power up other low-power electric equipments with the power supply mode of the embodiment as long as the water pump 100 has sufficient power.

In addition, the water pump 100 further includes a drive circuit. A rectifier circuit may be configured on the drive circuit to rectify the current induced and generated by the induction coil 402. The induction coil 402 is connected to the electric equipment(s) through the drive circuit for providing a low-voltage power source to the electric equipment(s), controlling a voltage change, and controlling on and off of the electric equipment(s).

With the configuration for the drive circuit, the magnitude of the current and voltage generated by the induction coil 402 may be adjusted, the current generated by the induction coil 402 may be rectified, the power supply of the electric equipment(s) may be ensured, and the working state of the electric equipment(s) may be controlled at the same time.

In the embodiment, the term "electric equipment(s)" refers to other low-power device(s) other than the water pump 100, or other low-power water pump(s) 100.

The induction iron core 401 of the power generation induction module 4 is in a U shape.

The aquarium includes a base seat 400 and the tank 200 disposed on the base seat 400. A stator isolation chamber 410 is convexly provided on the base seat 400. A stator chamber 9 is concavely provided at a side of the tank 200 close to the base seat 400, opposite to the stator isolation chamber 410, and in a direction facing toward the inside of the tank 200. An opening of the stator chamber 9 faces toward the outside of the tank 200. A rotor chamber 7 and a power generation chamber 11 are disposed corresponding to the stator chamber 9. The stator 1 is disposed in the stator isolation chamber 410, the rotor assembly 2 is disposed in the rotor chamber 7, and the power generation induction module 4 is disposed in the power generation chamber 11. In response to mounting the tank 200 onto the base seat 400, the stator isolation chamber 410 is located in the stator chamber 9. At this time, the rotor assembly 2 mounted in the rotor chamber 7 and the stator 1 mounted in the stator chamber 9 works in coordination with each other to form a complete water pump 100.

In another exemplary embodiment, the stator isolation chamber 410 may be concavely provided in the base seat 400, and the stator chamber 9 may be convexly provided on the tank 200.

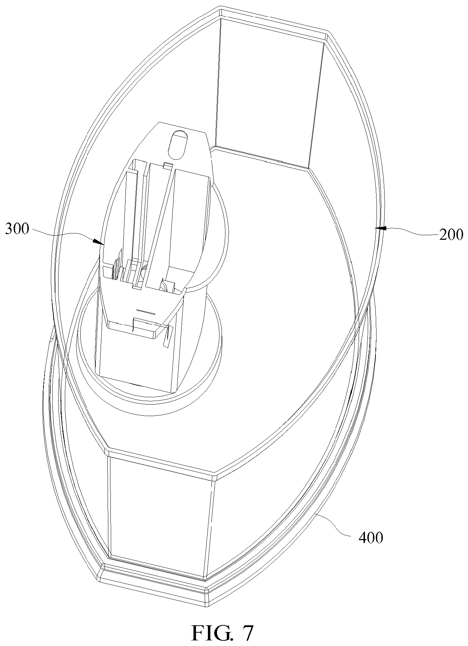

An embodiment is illustrated as shown FIGS. 7 to 12. The embodiment is similar to the above-mentioned embodiment in that a power generation induction module 4 and a rotor assembly 2 are also spaced apart from each other to dispose, a stator 1 is also disposed outside a tank 200, and the rotor assembly 2, an impeller 3 and the power generation induction module 4 are disposed in the tank 200. The embodiment differs from the above-mentioned embodiment in that the induction coil 402 of the power generation induction module 4 in the above-mentioned embodiment is wound around the induction iron core 401 while an induction coil 402 in the embodiment is directly wound around an outer wall of a first accommodation chamber 901 of a stator chamber 9.

The aquarium in the embodiment includes the tank 200, a water pump 100 and an electric equipment disposed in the tank 200. The water pump 100 includes a pump house 5, the rotor assembly 2, the impeller 3 which are disposed in the tank 200 and the stator 1 that is disposed outside the tank 200. A U-shaped iron core 101 of the stator 1 has two second iron core protrusions 103 at least one of which protrudes from a coil winding 102 of the U-shaped iron core 101. The stator chamber 9 for accommodating the stator 1 is provided concavely at an outer wall of the tank 200 in a direction facing inward the tank 200. The stator chamber 9 has two first accommodation chambers 901 spaced apart from each other. The second iron core protrusions 103 are disposed in the first accommodation chambers 901 respectively. An accommodation groove 210 is disposed on an inner wall of the tank 200 and between the two first accommodation chambers 901. The rotor assembly 2 includes a rotating shaft 201 and a permanent magnet rotor 202. The impeller 3 is located in the pump house 5 and is fixedly connected to the permanent magnet rotor 202 located in the accommodation groove 210 through the rotating shaft 201. The induction coil 402 is wound outside each of the first accommodation chambers 901 and is connected to the electric equipment. In the embodiment, a notch 104 is provided in an inner side of each of the two second iron core protrusions 103, and the two notches 104 each have an inclined slope. The two notches 104 are disposed up and down and are spaced apart from each other. The slope of one notch 104 is inclined upward, and the slope of the other notch 104 is inclined downward. An alternating magnetic field is generated after the coil winding 102 of the stator 1 outside the tank 200 is powered on, and is transmitted along the U-shaped iron core 101 (silicon steel sheet) to the notches 104 (starting angles). The magnetic field is uneven due to the presence of the notches 104, so that the permanent magnet rotor 202 in the tank 200 is driven to rotate and the permanent magnet rotor 202 drives the impeller 3 to rotate to generate a centrifugal force, and thereby water pumping is achieved under the action of the pump house 5. At the same time, the induction coils 402, which are wound around the outer circumference of the second iron core protrusions 103 of the stator 1, generate an induced current to supply power to the electric equipment in the tank 200. The electric equipments in the tank 200 in the embodiment are all low-power devices, and may all be powered by the induction coils 402 wound around the second iron core protrusions 103 of the stator 1. Experiments prove that it is totally feasible to supply power to other low-power electric equipments with the power supply mode of the embodiment as long as the water pump 100 has sufficient power.

Compared with the related art, the embodiment may avoid potential safety hazards such as electric leakage which may occur in response to determining that the power supply device outside the tank 200 is used alone to supply power to the electric equipment in the tank 200.

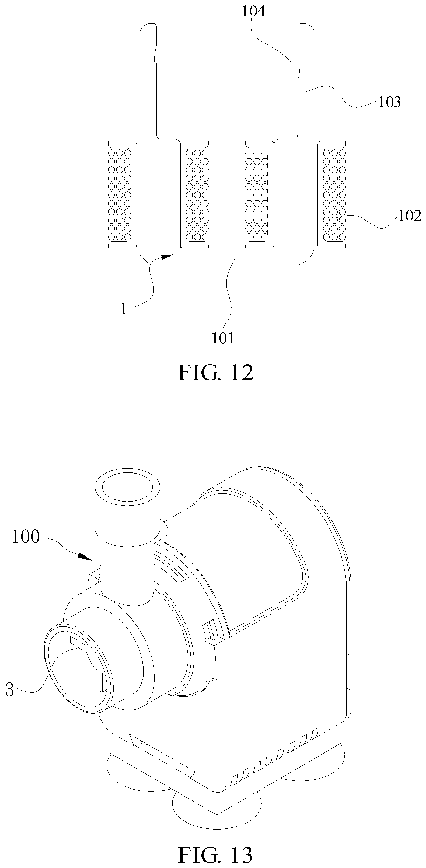

As illustrated in FIG. 12, each of the notches 104 in the embodiment has two faces. One of the two faces is the slope described above, and the other face is a plane which is parallel to the bottom of the stator 1. An angle is formed between the plane and the slope and is called the starting angle for starting the rotation of the permanent magnet rotor 202.

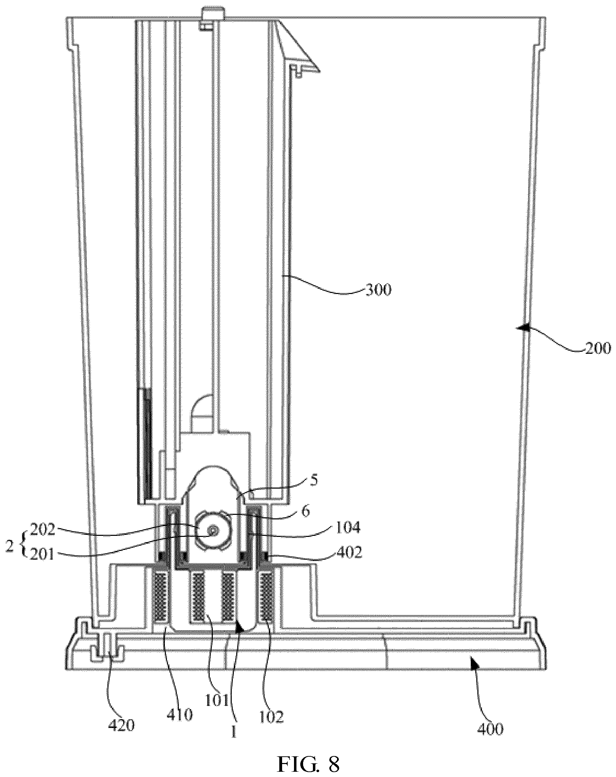

Typically, as illustrated in FIG. 8, the outer circumferences of the two first accommodation chambers 901 each are wound with the induction coil 402. This may improve power supply efficiency and power supply stability.

In the embodiment, the term "electric equipments" refers to other low-power devices other than the water pump 100.

The electric equipment includes a lamp 500. A filter 300 is detachably mounted in the tank 200 and is located at the bottom of the tank 200. The lamp 500 is mounted on the filter 300. The induction coils 402 are mounted on the bottom of the filter 300. The induction coil 402 is disposed around an outer circumference of each of the first accommodation chambers 901 in response to fixing the filter 300 to the bottom of the tank 200. Since the filter 300 is detachably fixed in the tank 200, the induction coils 402 are mated with the first accommodation chambers 901 in an insert mode in response to mounting the filter 300 in the tank 200. At this time, the second iron core protrusions 103 pass through the induction coils 402. The operation of the water pump 100 enables the induction coils 402 to generate the induced current to power the lamp 500 up. In response to moving the filter 300 out of the tank 200, each of the induction coils 402 is separated from the corresponding first accommodation chamber 901, so that the lamp 500 is directly powered off. The power-off treatment is not needed on the lamp 500 before the filter 300 is moved out, and the power-on and power-off treatment of the lamp 500 is quite convenient. In response to moving the filter 300 out of the tank 200, the pump house 5 in which the rotor assembly 2 and the impeller 3 are mounted may be directly moved out together to facilitate the cleaning and maintenance of the aquarium.

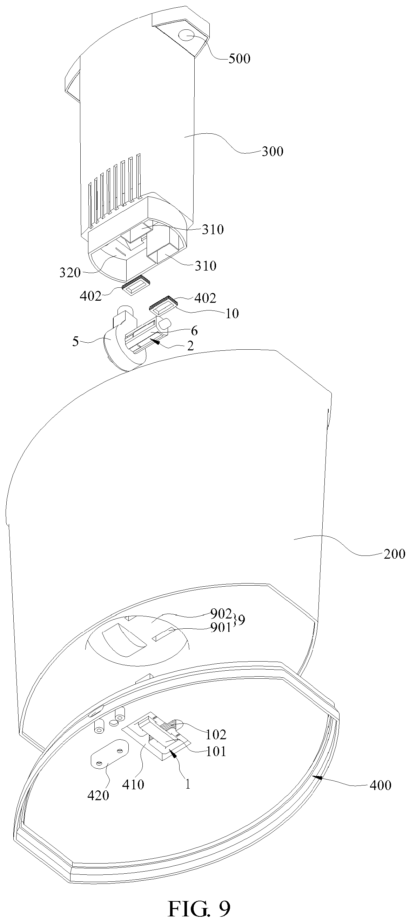

As illustrated in FIG. 9, two first mounting slots 310 are defined in the bottom of the filter 300, and the positions of the two first mounting slots 310 correspond to the first accommodation chambers 901. The induction coils 402 each are wound around a reel 10, which are further fixed to each of the first mounting slots 310 by means of potting an insulating material. The reel 10 has a through hole for an outer wall of each of the first accommodation chambers 901 to pass through. The first mounting slots 310 each have an opening portion the size of which is matched with the size of the induction coil 402. Each of the induction coils 402 is wound around the reel 10, and then they are fixedly mounted in each of the first mounting slots 310 by means of potting an electrically insulating material such as epoxy resin. The potted epoxy resin can serve as a waterproof function for the induction coils 402, and the first mounting slots 310 each is equivalent to a waterproof cabin which have good waterproof and sealing functions for the induction coils 402.

The bottom of the filter 300 is provided with a second mounting slot 320, and the first mounting slots 310 are located in the second mounting slot 320. In response to mounting the pump house 5 and the rotor assembly 2 in the second mounting slot 320, the permanent magnet rotor 202 is located between the two first mounting slots 310. An area of the second mounting slot 320 located between the two first mounting slots 310 corresponds to a position of a mounting slot between the two first accommodation chambers 901 at the bottom of the tank 200. After the pump house 5, the permanent magnet rotor 202, the induction coils 402 and the like are fixed on the filter 300 and the stator 1 is placed in the stator chamber 9, the electrical connection of the lamp 500 may be completed as long as the filter 300 is fixed in the tank 200.

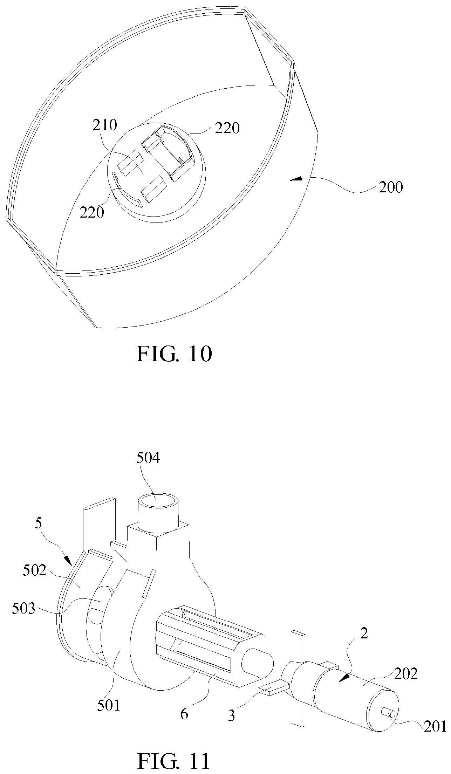

As illustrated in FIG. 10, the bottom of the tank 200 is provided with a connecting member 220 that is mated with a sidewall of the second mounting slot 320 in an insert mode. The connecting member 220 is mated with the second mounting slot 320 in the insert mode so that the filter 300 is fixed in the tank 200. The connecting member 220 is spaced apart from the outer walls of the first accommodation chambers 901, so as to leave mounting gaps for the outer circumferences of the first accommodation chambers 901 being mated in the insert mode with the induction coils 402 which is fixed in the first mounting slots 310 of the filter 300. In response to fixing the filter 300 in the tank 200, the second iron core protrusions 103 each may be ensured to pass through a mesopore of each of the induction coils 402.

As illustrated in FIG. 11, the water pump 100 further includes a mounting base 6 for mounting the rotor assembly 2. The mounting base 6 has one end connected to the pump house 5 and the other end extending to the area of the second mounting slot 320 being located between the two first mounting slots 310 so that the permanent magnet rotor 202 is fixed between the two first mounting slots 310.

In the embodiment, the pump house 5 includes a pump house body 501 and a pump house cover 502 which are detachably connected to each other. The pump house cover 502 is provided with a water inlet 503. A sidewall of the pump house body 501 facing away from the pump house cover 502 is provided with a through hole. One end of the rotating shaft 201 is connected to the mounting base 6 and the other end is connected to the impeller 3 in the pump house body 501 by passing through the through hole. An upper end of the pump house 5 is provided with a water outlet 504 communicating with a drain pipe. The drain pipe is disposed in the filter 300.

The stator chamber 9 further has a second accommodation chamber 902 for accommodating the coil windings 102. The first accommodation chambers 901 and the second accommodation chamber 902 are in communication. The stator 1 may be totally accommodated in the stator chamber 9. The stability of the induced current generated by the induction coils 402 is improved. In other embodiments, optimization is made on the basis of the above embodiments to make the movement of the tank 200 of the aquarium more convenient. For example, the aquarium further includes a base seat 400. The tank 200 is detachably mounted on the base seat 400. The stator 1 is mounted on the base seat 400. The second iron core protrusion 103 of the stator 1 is located in each of the first accommodation chambers in response to locating the tank 200 on the base seat 400. The tank 200 and the base seat 400 of the aquarium in the embodiment are separable. For the power supply of the water pump 100, the power is only needed to be supplied to the coil windings 102 of the stator 1 outside the tank 200, and then water pumping may be achieved under the action of the pump house 5 and by using the rotor assembly 2 and impeller 3 in the tank 200, and at the same time, the induction coils 402 are enabled to generate an induced current to power up the electric equipment such as the lamp 500 in the tank 200. Moreover, in response to removing the tank 200 of the aquarium from the base seat 400, the operation of the impeller 3 of the water pump 100 can be stopped, and the electrical connection of the electric equipment such as the lamp 500 can be immediately cut off. Any power-off treatment is not needed before the tank 200 is removed from the base seat 400.

The base seat 400 has a stator isolation chamber 410 concavely in a direction facing toward the tank 200. The stator 1 is fixed in the stator isolation chamber 410 by means of potting the insulating material, and an outer wall of the stator isolation chamber 410 is fitted with the stator chamber 9 in an insert mode.

A wire slot is further provided on the base seat 400. The bottom of the base seat 400 is provided with a wire fixing clip 420 connected the wire slot for fixing a wire leading out of the base seat 400 and connected to the coil windings 102 of the stator 1.

In the embodiment, the aquarium further includes a tank cover detachably coverable at the upper end of the tank 200.

In the embodiment, the tank 200 of the aquarium further includes a drive circuit. The induction coils 402 are connected to the electric equipment through the drive circuit for providing a low-voltage direct current power source to the electric equipment, controlling a voltage change, and controlling on and off of the electric equipment.

In the embodiment, for the lamp 500, a control switch of the lamp 500 is further disposed at the upper end of the filter 300. The lamp 500 may be a light emitting diode (LED) lamp which is disposed at the upper end of the filter 300. The brightness and the light color of the LED lamp may also be adjusted through the drive circuit.

An embodiment is illustrated in FIGS. 13 to 18. The embodiment is similar to the above-mentioned embodiments in that a power generation induction module is also spaced apart from a rotor assembly 2 to be disposed. The embodiment differs from the above-mentioned embodiments in that: the water pump 100 in the above-mentioned embodiments is in a split architecture, that is, the stator 1 of the water pump 100 is disposed outside the tank of the aquarium and the rotor assembly 2, the impeller 3 and the power generation induction module of the water pump 100 are all disposed in the tank, while a water pump 100 in the solution may be mounted in the tank of the aquarium as a whole. In the embodiment, the water pump 100 includes a pump house 5, and a stator 1, a rotor assembly 2, an impeller 3 and a power generation induction module are all disposed in the pump house 5. A stator chamber 9, a rotor chamber 7 and an impeller chamber 8 are disposed in the pump house 5. The rotor assembly 2 is disposed in the rotor chamber 7. The impeller 3 is disposed in the impeller chamber 8. The stator 1 is disposed in the stator chamber 9. The rotor chamber 7 and the stator chamber 9 are spaced apart from each other. The stator 1 includes a U-shaped iron core 101 and a coil winding 102 wound around the U-shaped iron core 101. The U-shaped iron core 101 has two second iron core protrusions 103 at least one of which protrudes from the coil winding 102. The rotor chamber 7 is disposed between the two second iron core protrusions 103. The U-shaped iron core 101 is further wound with an induction coil 402 for generating power, and the induction coil 402 is connected to an electric equipment.

In the embodiment, the term "electric equipments" refers to other low-power devices other than the water pump 100, or other low-power water pumps 100.

By means of adding the induction coil 402 for generating power to the U-shaped iron core 101 of the stator 1 of the water pump 100, in response to powering the winding of the coil winding 102 on, an alternating magnetic field is generated to enable the permanent magnet rotor 202 to rotate, and the impeller 3 is driven by the permanent magnet rotor 202 to rotate and generate a centrifugal force, and then the water pumping is achieved under the action of the pump house 5. The induction coil 402 wound around the U-shaped iron core 101 of the stator 1 generates an induced current to supply power to the remaining electric equipments. The number of wires connected to the outside of the aquarium is effectively reduced, and wiring clutter and potential safety hazards are reduced. In other embodiments, the induction coil 402 may also be connected to other external electric equipments for achieving power supply to devices other than the aquarium equipment (an aquarium or a pet water dispenser).

In the embodiment, the coil winding 102 and the induction coil 402 are insulated from each other on the U-shaped iron core 101.

The use safety may be ensured by disposing the coil winding 102 and the induction coil 402 to be insulated from each other. Since the external power source connected to the coil winding 102 is not directly transferred to the induction coil 402, the oversized current and voltage in the induction coil 402, which will cause damage to the electric equipment, can be avoided. Potential safety hazards are reduced.

In an example, reels 10 are sleeved on the U-shaped iron core 101 respectively at positions corresponding to the coil winding 102 and the induction coil 402. The coil winding 102 and the induction coil 402 are wound around the reels 10 respectively.

The coil winding 102 and the induction coil 402 are fixed on the reels 10 or in the stator chamber 9 by means of potting the insulating material.

By means of arranging the reels 10 for winding the coil winding 102 and induction coil 402 thereon on the U-shaped iron core 101, it may be convenient to achieve the positioning and fixing of the coil winding 102 and the induction coil 402. At the same time, the coil winding 102 and the induction coil 402 are fixed on the reels 10 by potting the insulating material or potted in the stator chamber 9 through the insulating material, and thus the coil winding 102 and the induction coil 402 may be well protected from water and be sealed, and electric leakage or coil water inflow may be prevented. Since the rotor chamber 7 and the stator chamber 9 are spaced apart from each other, water cannot enter the stator chamber 9 from the rotor chamber 7 during use, thereby achieving the effects of preventing water inflow and sealing.

The insulating material described in the embodiment may be epoxy resin, polyvinyl chloride, polyethylene, polytetrafluoroethylene, neoprene and polyvinyl acetal, silicone rubber, and the like. The water pump 100 provided in the embodiment further includes a drive circuit. A rectifier circuit may be configured on the drive circuit to rectify the current induced and generated by the induction coil 402. The induction coil 402 is connected to the electric equipment through the drive circuit for providing a low-voltage power source to the electric equipment, controlling a voltage change, and controlling on and off of the electric equipment.

With the drive circuit configured, the magnitude of the current and voltage generated by the induction coil 402 may be adjusted, and the current generated by the induction coil 402 may be rectified. The configured drive circuit can ensure the power supply of the electric equipment, and may be used for controlling the working state of the electric equipment at the same time.

In the embodiment, the rotor assembly 2 includes a rotating shaft 201 and a permanent magnet rotor 202. The impeller 3 is fixedly connected to the permanent magnet rotor 202 located in the rotor chamber 7 through the rotating shaft 201. Alternatively, the impeller 3 is fixedly connected to the permanent magnet rotor 202 and the impeller 3 and the permanent magnet rotor 202 are rotatable around the rotating shaft 201.

After a single-phase power source is supplied to the coil winding 102 on the stator 1, an alternating magnetic field is formed between the two second iron core protrusions 103 of the U-shaped iron core 101 and thereby drives the permanent magnet rotor 202 in the rotor chamber 7 to rotate. The permanent magnet rotor 202 in turn drives the impeller 3 to rotate to generate a centrifugal force. Then the water pumping may be achieved under the action of the impeller chamber 8. At the same time, the induction coil 402 wound around the U-shaped iron core 101 of the stator 1 is induced by the alternating magnetic field on the coil winding 102 and the U-shaped iron core 101 to generate the induced current on the induction coil 402, and then the power is supplied to the remaining electric equipments.

The electric equipments in the embodiment are all low-power devices, and may all be powered by the induction coil 402 wound around the second iron core protrusion 103 of the stator 1. Experiments prove that it is totally feasible to supply power to other low-power electric equipments in the power supply mode of the embodiment as long as the water pump 100 has sufficient power.

In the embodiment, the U-shaped iron core 101 included in the stator 1 of the water pump 100 is formed by stacking a plurality of U-shaped silicon steel sheets, and includes two straight arms and a connection portion connecting the two straight arms.

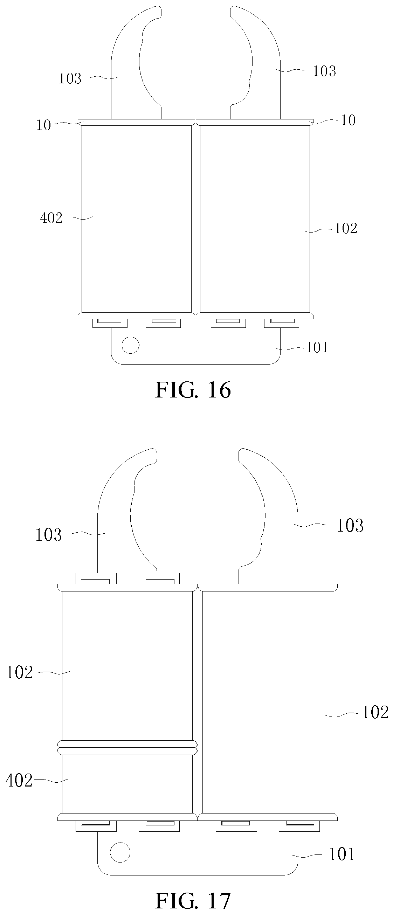

As illustrated in FIG. 16, in an embodiment, the reels 10 are sleeved respectively on the two straight arms of the U-shaped iron core 101 of the stator 1 of the water pump 100, and then are respectively wound with the coil winding 102 and the induction coil 402. The coil winding 102 and the induction coil 402 are both potted on the reels 10 by using the insulating material after the winding is completed so as to achieve a sealing wrap effect on the coil winding 102 and the induction coil 402. In addition, the winding of the coil winding 102 and the induction coil 402 respectively on the two straight arms of the U-shaped iron core 101 of the stator 1 may facilitate to complete the fabrication of the stator 1.

As illustrated in FIG. 17, in another embodiment, a first reel is sleeved on one straight arm of the U-shaped iron core 101 of the stator 1 of the water pump 100, and a second reel and a third reel are sleeved on the other straight arm. The first reel and the second reel are wound with the coil windings 102, and the third reel is wound with the induction coil 402. The coil windings 102 and the induction coil 402 are both potted on the reels 10 by using the insulating material after the winding is completed.

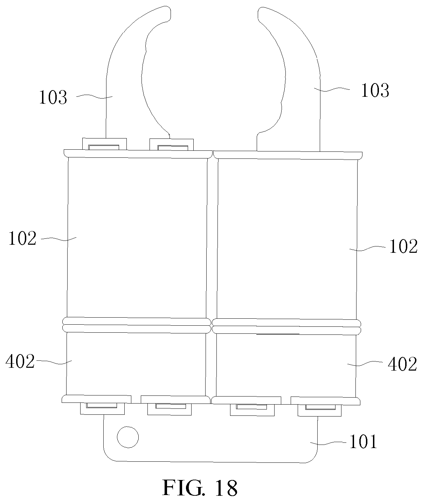

As illustrated in FIG. 18, in another embodiment, a first reel and a second reel are sleeved on one straight arm of the U-shaped iron core 101, and a third reel and a fourth reel are sleeved on the other straight arm. The first reel and the third reel are wound with the coil windings 102 respectively, and the second reel and the fourth reel are wound with the induction coils 402 respectively. The coil windings 102 and the induction coils 402 are potted on the corresponding reels 10 by using the insulating material after the winding is completed.

The above embodiments are merely a part of embodiments of the disclosed solution. In addition, the coil winding 102 and the induction coil 402 may be wound only on one straight arm of the U-shaped iron core 101, or the coil winding 102 and the induction coil 402 is cross-wound or mix-wound.

## Claims

1. An aquarium equipment, comprising a water pump (100) and a tank (200), the water pump comprising: a stator (1), a rotor assembly (2), an impeller (3) and a power generation induction module (4); wherein
the stator (1) comprises a U-shaped iron core (101) and a coil winding (102) wound around the U-shaped iron core (101), and the coil winding (102) is connected to an external power source; the rotor assembly (2) comprises a rotating shaft (201) and a permanent magnet rotor (202); the impeller (3) is connected to the rotating shaft (201) or to the permanent magnet rotor (202); and the power generation induction module (4) is spaced apart from the rotor assembly (2), the rotor assembly (2) and the power generation induction module (4) are both disposed within a range of a magnetic field at an opening of the U-shaped iron core (101), and the power generation induction module (4) is electrically connected to an electric equipment;
said aquarium equipment being **characterised in that** the rotor assembly (2), the impeller (3) and the power generation induction module (4) are disposed in the tank (200), and the stator (1) is disposed outside the tank (200);
wherein a stator chamber (9) for accommodating the stator (1) is provided concavely at an outer wall of the tank (200) in a direction facing inward the tank (200),
wherein the stator chamber (9) comprises two first accommodation chambers (901) spaced apart from each other, the U-shaped iron core (101) comprises two second iron core protrusions (103) which protrude from two coil windings (102) respectively, the two second iron core protrusions (103) are arranged in the two first accommodation chambers (901) respectively,
wherein an accommodation groove (210) is disposed in an inner wall of the tank (200) and between the two first accommodation chambers (901), the permanent magnet rotor (202) is disposed in the accommodation groove (210), and
wherein the power generation induction module (4) comprises two induction coils (402), and the two induction coils (402) are wound respectively outside the two first accommodation chambers (901) along circumferences of the first accommodation chambers (901).

2. The aquarium equipment of claim 1, wherein an electric equipment is disposed in the tank (200), the electric equipment comprises a lamp (500), a filter (300) is detachably disposed in the tank (200) and at a bottom of the tank (200), the lamp (500) is mounted on the filter (300), the induction coils (402) are mounted on a bottom of the filter (300), and the induction coils (402) are arranged around outer circumferences of the first accommodation chambers (901) respectively in response to fixing the filter (300) at the bottom of the tank (200).

3. The aquarium equipment of claim 2, wherein two first mounting slots (310) are defined at the bottom of the filter (300) and at positions corresponding to the first accommodation chambers (901), the induction coils (402) are wound around reels (10) which are further fixed in the first mounting slots (310) by means of potting insulating material, and each of the reels (10) is provided with a through hole configured for an outer wall of each of the first accommodation chambers (901) to pass through.

4. The aquarium equipment of claim 3, further comprising a base seat (400), wherein the tank (200) is detachably mounted on the base seat (400), the stator (1) is mounted on the base seat (400), and the second iron core protrusions (103) of the stator (1) are located in the first accommodation chambers (901) respectively in response to disposing the tank (200) on the base seat (400).

## Patentansprüche

1. Aquariumausrüstung, umfassend eine Wasserpumpe (100) und einen Tank (200), die Wasserpumpe umfassend: einen Stator (1), eine Rotorbaugruppe (2), ein Flügelrad (3) und ein Leistungserzeugungsinduktionsmodul (4); wobei
der Stator (1) einen U-förmigen Eisenkern (101) und eine Spulenwicklung (102) umfasst, die um den U-förmigen Eisenkern (101) herum gewickelt ist, und die Spulenwicklung (102) mit einer externen Energiequelle verbunden ist; die Rotorbaugruppe (2) eine Drehwelle (201) und einen Permanentmagnetrotor (202) umfasst; das Flügelrad (3) mit der Drehwelle (201) oder mit dem Permanentmagnetrotor (202) verbunden ist; und das Leistungserzeugungsinduktionsmodul (4) von der Rotorbaugruppe (2) beabstandet ist, wobei die Rotorbaugruppe (2) und das Leistungserzeugungsinduktionsmodul (4) beide innerhalb eines Bereichs eines Magnetfelds an einer Öffnung des U-förmigen Eisenkerns (101) angeordnet sind und das Leistungserzeugungsinduktionsmodul (4) mit einer elektrischen Ausrüstung elektrisch verbunden ist;
wobei die Aquariumausrüstung **dadurch gekennzeichnet ist, dass** die Rotorbaugruppe (2), das Flügelrad (3) und das Leistungserzeugungsinduktionsmodul (4) in dem Tank (200) angeordnet sind und der Stator (1) außerhalb des Tanks (200) angeordnet ist;
wobei eine Statorkammer (9) zum Aufnehmen des Stators (1) in einer Richtung, die in ein Inneres des Tanks (200) gerichtet ist, an einer Außenwand des Tanks (200) konkav bereitgestellt ist,
wobei die Statorkammer (9) zwei erste Aufnahmekammern (901) umfasst, die voneinander beabstandet sind, wobei der U-förmige Eisenkern (101) zwei zweite Eisenkernvorsprünge (103) umfasst, die jeweils von zwei Spulenwicklungen (102) vorspringen, wobei die zwei zweiten Eisenkernvorsprünge (103) jeweils in den zwei ersten Aufnahmekammern (901) eingerichtet sind,
wobei eine Aufnahmenut (210) in einer Innenwand des Tanks (200) und zwischen den zwei ersten Aufnahmekammern (901) angeordnet ist, der Permanentmagnetrotor (202) in der Aufnahmenut (210) angeordnet ist, und
wobei das Leistungserzeugungsinduktionsmodul (4) zwei Induktionsspulen (402) umfasst und die zwei Induktionsspulen (402) jeweils außerhalb der zwei ersten Aufnahmekammern (901) entlang Umfängen der ersten Aufnahmekammern (901) gewickelt sind.

2. Aquariumausrüstung nach Anspruch 1, wobei eine elektrische Ausrüstung in dem Tank (200) angeordnet ist, wobei die elektrische Ausrüstung eine Lampe (500) umfasst, ein Filter (300) in dem Tank (200) und an einem Boden des Tanks (200) abnehmbar angeordnet ist, die Lampe (500) auf dem Filter (300) montiert ist, wobei die Induktionsspulen (402) auf einem Boden des Filters (300) montiert sind und die Induktionsspulen (402) jeweils um Außenumfänge der ersten Aufnahmekammern (901) herum als Reaktion auf ein Befestigen des Filters (300) an dem Boden des Tanks (200) eingerichtet sind.

3. Aquariumausrüstung nach Anspruch 2, wobei zwei erste Montierschlitze (310) an dem Boden des Filters (300) und an Positionen definiert sind, die den ersten Aufnahmekammern (901) entsprechen, die Induktionsspulen (402) um Rollen (10) gewickelt sind, die ferner mittels Vergießisolationsmaterial in den ersten Montierschlitzen (310) befestigt sind, und jede der Rollen (10) mit einem Durchgangsloch versehen ist, das für eine Außenwand jeder der ersten Aufnahmekammern (901) konfiguriert ist, um hindurchzuverlaufen.

4. Aquariumausrüstung nach Anspruch 3, ferner umfassend einen Basissitz (400), wobei der Tank (200) an dem Basissitz (400) abnehmbar montiert ist, wobei der Stator (1) auf dem Basissitz (400) montiert ist und die zweiten Eisenkernvorsprünge (103) des Stators (1) sich jeweils in den ersten Aufnahmekammern (901) als Reaktion auf das Anordnen des Tanks (200) an dem Basissitz (400) befinden.

## Revendications

1. Équipement d'aquarium, comprenant une pompe à eau (100) et un réservoir (200), la pompe à eau comprenant : un stator (1), un ensemble de rotor (2), une roue (3) et un module d'induction de génération d'énergie (4) ; dans lequel
le stator (1) comprend un noyau de fer en forme de U (101) et un enroulement de bobine (102) enroulé autour du noyau de fer en forme de U (101), et l'enroulement de bobine (102) est connecté à une source d'énergie externe ; l'ensemble du rotor (2) comprend un arbre rotatif (201) et un rotor à aimant permanent (202) ; la roue (3) est connectée à l'arbre rotatif (201) ou au rotor à aimant permanent (202) ; et le module d'induction de génération d'énergie (4) est espacé de l'ensemble du rotor (2), l'ensemble du rotor (2) et le module d'induction de génération d'énergie (4) sont tous deux disposés dans une plage d'un champ magnétique à une ouverture du noyau de fer en forme de U (101), et le module d'induction de génération d'énergie (4) est électriquement connecté à un équipement électrique ;
ledit équipement d'aquarium étant **caractérisé en ce que** l'ensemble du rotor (2), la roue (3) et le module d'induction de génération d'énergie (4) sont disposés dans le réservoir (200), et le stator (1) est disposé à l'extérieur du réservoir (200) ;
dans lequel une chambre de stator (9) destinée à loger le stator (1) est prévue de manière concave au niveau d'une paroi extérieure du réservoir (200) dans une direction faisant face à l'intérieur du réservoir (200),
dans lequel la chambre de stator (9) comprend deux premières chambres de logement (901) espacées l'une de l'autre, le noyau de fer en forme de U (101) comprend deux secondes saillies de noyau de fer (103) qui font saillie à partir de deux enroulements de bobine (102) respectivement, les deux secondes saillies de noyau de fer (103) sont disposées dans les deux premières chambres de logement (901) respectivement,
dans lequel une rainure de logement (210) est disposée dans une paroi intérieure du réservoir (200) et entre les deux premières chambres de logement (901), le rotor à aimant permanent (202) est disposé dans la rainure de logement (210), et
dans lequel
le module d'induction de génération d'énergie (4) comprend deux bobines d'induction (402), et les deux bobines d'induction (402) sont enroulées respectivement à l'extérieur des deux premières chambres de logement (901) le long des circonférences des premières chambres de logement (901).

2. Équipement d'aquarium selon la revendication 1, dans lequel un équipement électrique est disposé dans le réservoir (200), l'équipement électrique comprend une lampe (500), un filtre (300) est disposé de manière amovible dans le réservoir (200) et à un fond du réservoir (200), la lampe (500) est montée sur le filtre (300), les bobines d'induction (402) sont montées sur un fond du filtre (300), et les bobines d'induction (402) sont disposées autour des circonférences extérieures des premières chambres de logement (901) respectivement en réponse à la fixation du filtre (300) au fond du réservoir (200).

3. Équipement d'aquarium selon la revendication 2, dans lequel deux premières fentes de montage (310) sont définies au fond du filtre (300) et à des positions correspondant aux premières chambres de logement (901), les bobines d'induction (402) sont enroulées autour de bobines (10) qui sont en outre fixées dans les premières fentes de montage (310) au moyen d'un matériau isolant d'empotage, et chacune des bobines (10) est pourvue d'un trou traversant configuré pour le passage d'une paroi extérieure de chacune des premières chambres de logement (901).

4. Équipement d'aquarium selon la revendication 3, comprenant en outre un siège de base (400), dans lequel le réservoir (200) est monté de manière amovible sur le siège de base (400), le stator (1) est monté sur le siège de base (400), et les secondes saillies de noyau de fer (103) du stator (1) sont situées dans les premières chambres de logement (901) respectivement en réponse à la disposition du réservoir (200) sur le siège de base (400).
